# EUROPÄISCHE PATENTSCHRIFT

(11) **EP 0 869 503 B1**
(45) Veröffentlichungstag und Bekanntmachung des Hinweises auf die Patenterteilung: **15.10.2003**
(21) Anmeldenummer: 97105419.2
(22) Anmeldetag: 01.04.1997
(51) Int. Cl.: G11B 33/02, G11B 25/04

(54) **Plattenspeichergerät und Verfahren zur Herstellung eines Plattenspeichergerätes**
Disc storage apparatus and manufacturing method of disc storage apparatus
Appareil à mémoire à disques et procédé de fabrication d'un appareil à mémoire à disques

(43) Veröffentlichungstag der Anmeldung: 07.10.1998
(73) Patentinhaber: Papst Licensing GmbH & Co. KG, 78112 St Georgen (DE)
(72) Erfinder: Papst, Georg F., 78549 Spaichingen (DE)
(74) Vertreter: Henkel, Feiler, Hänzel

(56) Entgegenhaltungen:
- EP-A- 0 184 159
- EP-A- 0 569 593
- EP-A- 0 715 309
- WO-A-94/09487
- US-A- 5 414 574
- US-A- 5 473 507

## Beschreibung

Die vorliegende Erfindung betrifft ein Plattenspeichergerät gemäß dem Oberbegriff des Anspruches 1 sowie ein Verfahren zur Herstellung eines solchen Plattenspeichergerätes. Insbesondere betrifft die Erfindung Plattenspeichergeräte mit einem oder mehreren plattenartigen Informationsträgern, die an einer rotierbaren Plattenträgernabe befestigt oder befestigbar sind und in einem von der Umgebung abgeschlossenen Betriebsraum eines Gerätegehäuses untergebracht sind und von denen bzw. auf die mittels über die Informationsträger bewegbarer optischer oder magnetischer Schreib-/Leseköpfe Daten aufgezeichnet oder ausgelesen werden können.

Bei der zunehmenden Datenmenge, die auf derartigen Plattenspeichergeräten untergebracht werden soll, ist die Aufzeichnung der Daten in immer höherer Dichte und größerer Datenmenge erforderlich. Gleichzeitig soll die Zugriffszeit auf die Daten beim Aufzeichnen und Auslesen weiter verkürzt sein, so daß sowohl die Bewegungsgeschwindigkeit der Schreib/Leseköpfe als auch die Drehgeschwindigkeit der Informationsträger gesteigert werden müssen. Vor allem wegen der hohen Datenspurdichte bedingt das extrem hohe Anforderungen an die Genauigkeit und Maßhaltigkeit aller mechanischen Komponenten, insbesondere der Lagerungen der Informationsträger und der Schreib-/Leseköpfe und deren jeweiliger Antriebe hinsichtlich gegenseitiger Parallelität und Lagebeziehung der Achsen oder Wellen.

Bei der überwiegend anzutreffenden Ausgestaltung dieser Plattenspeichergeräte, wie sie beispielsweise auch aus der EP-069 545 bekannt ist, ist ein einstückiges Gerätechassis oder eine Grundplatte aus Metall- oder Aluminiumguß bzw. - druckguß vorgesehen, in dem bzw. in der die Bohrungen bzw. Funktionsflächen bzw. Lagersitze für die Lagerungen und Antriebe der Informationsträger und der Schreib-/Leseköpfe durch spanende Bearbeitung ausgebildet sind. Gußbauteile bieten den Vorteil, daß die Ausbildung von Vorsprüngen, Flanschen und Naben verhältnismäßig einfach durch entsprechende Ausformung und gußgerechte Gestaltung der Gußformen und -werkzeuge möglich ist. An dem Gerätechassis sind im allgemeinen dann sowohl die Informationsträger und Schreib-/Leseköpfe mit Antriebseinrichtungen als auch ein ebener oder schalenförmiger Gerätegehäusedeckel aus umgeformtem Blech gelagert, der die einzelnen Komponenten zur Bildung des Betriebsraumes mit verminderter Kontamination, vor allem bei Festplatten (HDD) mit möglichst großer Reinheit umgibt. Innerhalb des umschlossenen Raumes oder außerhalb an dem Gerätechassis sind üblicherweise noch Platinen mit Zuleitungen und teilweise auch elektronischen Schaltungen angebracht.

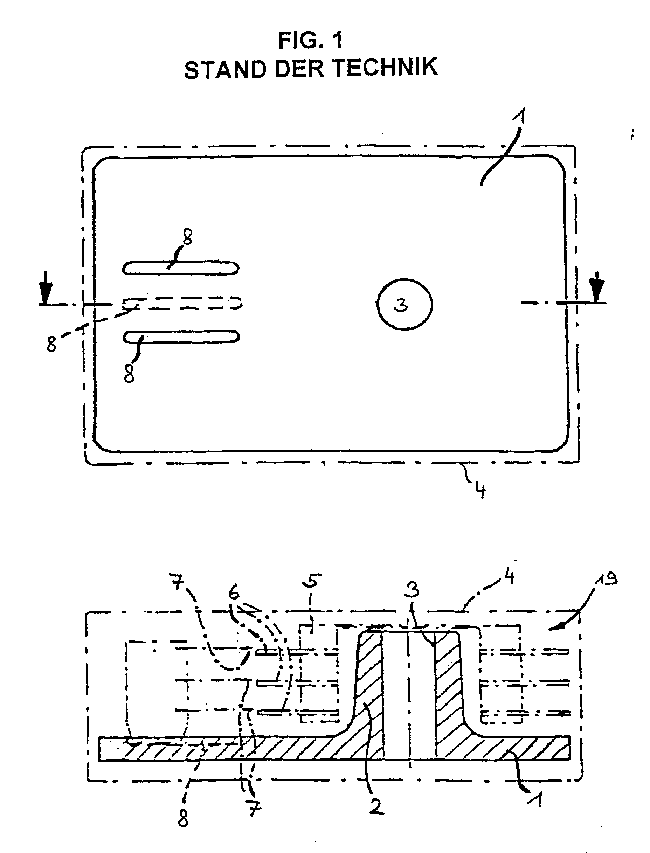

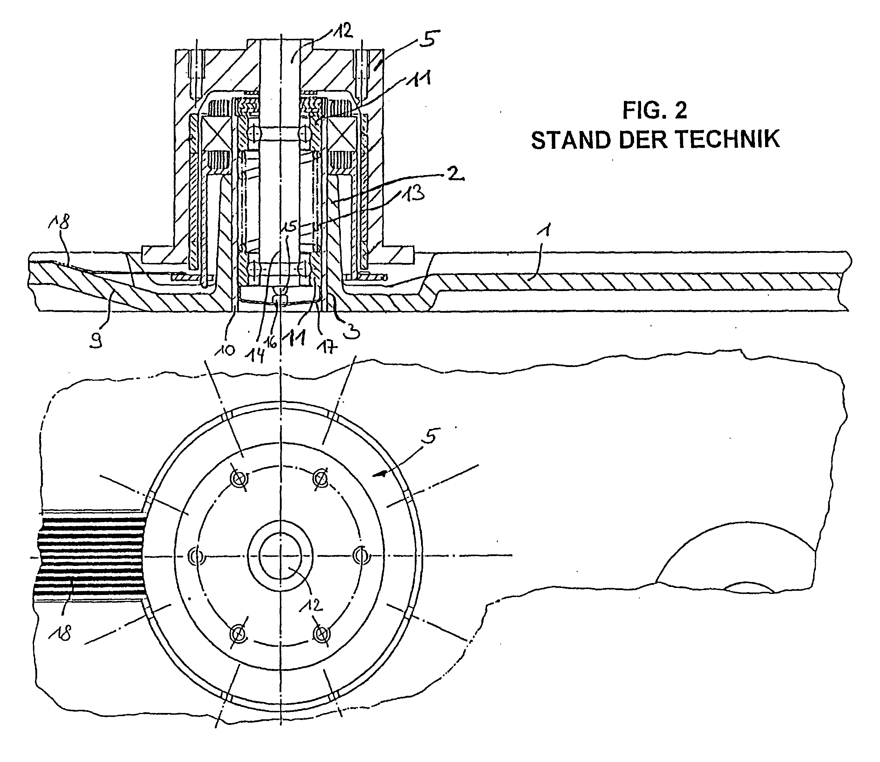

Ein weiteres gattungsgemäßes Plattenspeichergerät, wie es der vorliegenden Erfindung zugrundeliegt, ist in der EP-0 184 159 beschrieben. Dieses Gerät ist zunächst schematisch sowie in einem Ausführungsbeispiel in den Figuren 1 und 2 jeweils im Schnitt dargestellt. Die folgende Beschreibung erläutert beispielhaft die technischen Komponenten und Merkmale dieses Geräts, die auch bei Ausführungsbeispielen des erfindungsgemäßen Geräts vorliegen können und daher im Rahmen der detaillierten Beschreibung der Erfindung nicht nochmals im Detail erläutert werden.

Die Fig. 1 zeigt in Draufsicht und im Schnitt ein gattungsgemäßes Plattenspeichergerät, hier beispielsweise als Festplattenspeichergerät (HDD). Ein üblicherweise aus Metallguß gefertigtes Gerätechassis 1 weist einen senkrecht aus diesem hervorragenden angegossenen Lagerführungszapfen 2 mit einer Lagerbohrung 3 auf. Mit strichpunktierten Linien sind die Außenkontur eines Gerätedeckels 4, einer rotierbaren Nabe 5, die eine oder mehrere konzentrische Informationsträger- bzw. Speicherplatten 6 trägt und mittels eines nicht dargestellten Spindelmotors antreibbar ist, Schreib-/Leseköpfe bzw. Abtastköpfe 7, die die Oberflächen der Speicherplatten abtasten und von in der Fig. 1 nicht dargestellten Voice-Coil-Motoren, die in einem oder mehreren Schlitzen 8 an deren Seitenflächen geführt werden, über die Oberflächen der Speicherplatten bewegt werden. Die Führungsschlitze 8 werden zusammen mit der Lagerbohrung 3 für die Drehachse der Speicherplattennabe in einer Aufspannung des Gerätechassis 1 bearbeitet, um dadurch die erforderliche Genauigkeit hinsichtlich der Lagebeziehung und Maßhaltigkeit zu erzielen. Bei dem Festspeicherplattengerät sind die Speicherplatten und die Schreib-/Leseköpfe in einem als sogenannter Reinraum 19 dienender Betriebsraum untergebracht, der bei der Fertigung des Gerätes unter großer Reinhaltung durch abschließendes Versiegeln von Gerätechassis 1 und Geräteabdeckung 4 gegenüber der Umgebung gebildet wird. Abhängig von der Ausgestaltung der Lagerung der Abtastköpfe und deren Antrieb können diese auch an einem feststehenden Lagerzapfen des Gerätechassis oder in einer Lagerbohrung des Gerätechassis für ihre Bewegung relativ zur Oberfläche der Speicherplatten gelagert sein.

Wesentlich ist aber, daß das einstückige, als Gußteil ausgeführte Gerätechassis 1 mindestens Träger für alle Antriebseinrichtung und Lagerungen, deren gegenseitige Anordnung, Ausrichtung und Bewegung wesentlich für die Funktion der unter höchsten Genauigkeitsanforderungen stehenden Operationen beim Betrieb des Plattenspeichergerät sind, ist und daß alle im Zusammenhang mit der Lagerung und dem Antrieb der Plattenspeicher und der Abtastköpfe stehenden Lager- und Funktionsflächen in einer gemeinsamen Aufspannung des Gerätechassis bearbeitet werden.

Die Fig. 2 zeigt ein anderes, detaillierteres Ausführungsbeispiel eines Plattenspeichergerätes, wobei in der Darstellung die Speicherplatten, Abtastköpfe und zugehöriger Antrieb sowie Gerätedeckel und weitere Einzelheiten zur Vereinfachung weggelassen sind, weil deren Ausgestaltung an sich bekannt ist und im Rahmen der Erfindung beliebig, beispielsweise wie bei der Figur 1, gewählt werden kann. Außerdem zeigt dieses Beispiel einen in der Nabe angeordneten Spindelmotor, bei dem die Welle zusammen mit der Nabe rotiert und im Gerätechassis gelagert ist. Alternativ kann auch die Welle als feststehender Achszapfen in einer Bohrung des Gerätechassis fixiert sein und die Lagerung in der Nabe vorgesehen werden.

Bei diesem Ausführungsbeispiel ist ein Bereich 9 des Lagerführungszapfens 2 für die Speicherplatten in dem aus Aluminiumguß bestehenden Gerätechassis 1 wannenartig vertieft. Durch diese Vertiefung wird sowohl die Steifigkeit des Gerätechassis erhöht als auch die Bauhöhe des Geräts verringert.
In die Lagerbohrung 3 des Lagerführungszapfens ist eine Stahlhülse 10 eingepreßt oder eingeklebt, in der die Wälzlager 11 zur Lagerung der Welle 12 für die glockenförmige Nabe 5 zur Halterung der Speicherplatten eingesetzt und beispielsweise mit einer Feder 13 verspannt sind. Die Welle 12 ist in die Nabe 5 hochgenau eingepaßt, wobei auch die zylindrische Außenfläche der Nabe hochgenau koaxial zur Drehachse 14 liegt. Bei der dargestellten Lagerung wirken Laufrillen in der Welle als Innenlaufringe für die Wälzlager 11. Andere Lagerungen sind selbstverständlich auch möglich. Am unteren Ende der Welle ist eine Rundung 15 vorgesehen, die über eine Punktlagerfläche eines Kunststoffklötzchens 16 elektrostatische Ladung über eine in die Stahlhülse eingesetzte federnde Metallkappe 17 abzuleiten vermag. Der Motor wird über Flachleitungen 18 mit den notwendigen Steuersignalen versorgt.

Aufgrund der Forderungen in diesem technischen Bereich nach weiterer Miniaturisierung der Plattenspeichergeräte bei Senkung der Material- und Herstellungskosten und Erhöhung der Leistungsfähigkeit (Speicherkapazität, Zugriffszeit, Datenübertragungsrate etc.) besteht die Aufgabe der vorliegenden Erfindung darin, ein Plattenspeichergerät sowie ein Verfahren zu dessen Herstellung anzugeben, das weitere Kostensenkungen und Miniaturisierung ermöglicht.

Erfindungsgemäß wird diese Aufgabe gelöst durch Schaffung eines Plattenspeichergeräts mit einem oder mehreren an einer rotierbaren Plattenträgernabe befestigten oder befestigbaren und mittels der Plattenträgernabe in einem Betriebsraum rotierbaren Informationsträgerplatten zur Speicherung von Daten und einem oder mehreren relativ zu Oberflächen der Informationsträgerplatten bewegbaren optischen oder magnetischen Schreib-/Leseköpfen zum Aufzeichnen und/oder Auslesen der Daten auf bzw. von den Oberflächen der Informationsträgerplatten, wobei die Plattenträgernabe und die Schreib-/Leseköpfe mit ihren Antriebseinheiten an einem einstückigen Gerätechassis gelagert sind und eine Geräteabdeckung vorgesehen ist, die an dem Gerätechassis befestigt ist und wobei die Lager- und Montageflächen für die Plattenträgernabe und für die Schreib-/Leseköpfe sowie für deren Antriebseinheiten an dem Gerätechassis in einer Aufspannung bearbeitet sind, wobei das Gerätechassis durch ein mittels Stanzen und Umformen oder Prägen gefertigtes Blechteil gebildet ist.

Durch Ausbildung des Gerätechassis als Stanz- und Umform-Blechteil läßt sich die Fertigung dieses wichtigen Teils des Geräts und damit des ganzen Geräts in weniger Teilschritten und insgesamt kostengünstiger durchführen und beispielsweise wesentlich einfacher Automatisieren wie bei den bisher. verwendeten Gußteilen. Das ist umso bedeutsamer, da die Lager- und Funktionsflächen des Gerätechassis in einer Aufspannung bearbeitet werden müssen. Durch Wahl eines geeignet legierten Ausgangsbleches können außerdem Langzeitund Festigkeitseigenschaften des Gerätechassis einfach eingestellt werden. Außerdem können die Festigkeit bzw. Steifigkeit des Gerätechassis durch einfache sickenförmige Ausformungen in an sich bekannter Weise erhöht werden, ohne die Materialdicke des Bleches bzw. das Gewicht erhöhen zu müssen. Die Langzeitgenauigkeit bzw. -maßhaltigkeit des Gerätechassis und damit der daran vorgesehenen Funktions- und Lagerflächen kann durch geeignete thermische Behandlung einfach verbessert werden. Schließlich sind die Fertigungs- und Bearbeitungskosten für Blechteile geringer als für Gußteile.

In einer bevorzugten Ausführungsform des Plattenspeichergeräts sind Rohrabschnitte bzw. Lagerzapfen zur Bildung von Lagerabschnitten für die Informationsträgerplattennabe und/oder die Schreib-/Leseköpfe an dem Gerätechassis angeschweißt, und zwar vorzugsweise mittels dem an sich bekannten Kondensatorimpulsschweißen oder Elektronenstrahlschweißen. Diese Ausgestaltung ermöglicht es, auf kostengünstige Weise Lagerpositionen für verschiedenste Funktionselemente vorzusehen, die sodann in einer gemeinsamen Aufspannung bearbeitet werden. Durch die Wahl des Kondensatorimpulsschweißens oder Elektronenstrahlschweißens als Verbindungsarten ohne nennenswerte Temperaturentwicklung und Erwärmung des Gerätechassis außerhalb der Schweißstellen läßt sich das Entstehen von Spannungen und damit auch Langzeitverformungen des Blechteils weitgehend einschränken. Doch noch vorhandene innere Spannungen können in an sich bekannter Weise durch geeignete thermische Nachbehandlung vor der spanenden Endbearbeitung, beispielesweise durch Erwärmen beseitigt werden.
Zur Verbesserung der Genauigkeit der Verschweißung zwischen dem Rohrabschnitt und dem Gerätechassis ist der Rohrabschnitt an der Stirnseite, mit der er auf das Gerätechassis aufgesetzt ist, zur Verkleinerung der Auflagefläche zum Außenumfang hin abgeschrägt.

In einer alternativen Ausgestaltung können die Rohrabschnitte bzw. Lagerzapfen zur Bildung der Lagerabschnitte auch an der das Gerätechassis bildenden Grundplatte in an sich bekannter Weise angenietet werden. Dazu ist an der Unterseite der Rohrabschnitte bzw. Lagerzapfen ein Ansatz vorgesehen, der sich durch eine Bohrung oder Ausnehmung in der Grundplatte hindurch erstreckt und an der gegenüberliegenden Seite vernietet wird. Nach dem Festnieten der Rohrabschnitte bzw. Lagerzapfen werden diese im Rahmen der Endbearbeitung an. Innen- und/oder Außenumfangsflächen bearbeitet, um die Genauigkeit der Funktionsflächen zu gewährleisten.

In einer weiteren Ausführungsform können in dem das Gerätechassis bildenden Blechformteil sickenartige Ausformungen zur Erhöhung der Steifigkeit des Gerätechassis und/oder zur Bildung einer Spaltdichtung mit der Antriebseinheit der Informationsträgerplatten, insbesondere der Plattenträgernabe ausgebildet sein, wobei die sickenartigen Ausformungen zur Bildung der Spaltdichtung eine zur Welle der Plattenträgernabe konzentrische umlaufende Ringnut und/oder einen konzentrischen umlaufenden Höckerring umfassen können, die bzw. der mit der Bearbeitung der Lagerund Montageflächen in einer Aufspannung bearbeitet wird oder werden und zusammen mit der ebenfalls genau bearbeiteten Plattenträgernabe einen denkbar engsten Spalt bildet.

Die erfindungsgemäße Ausgestaltung als Blechformteil ermöglicht die Verwendung von Stahlblech oder eines Aluminiumblechs, wobei anzuschweißende Rohrabschnitte und Achszapfen aus einem damit verschweißbaren Material gefertigt sind. Bei Verwendung von Aluminiumblech sind außerdem die für dieses Material geeigneten Behandlungsmethoden zur Vermeidung oder Beseitigung von beim Umformen und Schweißen entstehenden Spannungen anzuwenden - beispielsweise durch Aufwärmen als sogenanntes Zwischenglühen vor dem Umformen. Dieses Spannungsarmglühen erfolgt bei Aluminium mit ca. 200°C und bei Stahl bei ca. 600°C. Nach der Umformung und vor der Endbearbeitung wird bei Aluminium mit ca. 100°C und bei Stahl mit ca. 400°C getempert (Wärmenachbehandlung).

In einer besonders bevorzugten Ausführungsform des erfindungsgemäßen Plattenspeichergeräts sind die Informationsträgerplatten starre, an der Nabe befestigte Platten und der Betriebsraum, in dem die Informationsträgerplatten rotieren, ist ein Raum höchster Reinheit, der durch das Gerätechassis und die daran angebrachte Geräteabdeckung gebildet ist. Ein solches Gerät ist damit ein Festplattenspeichergerät bzw. sogenanntes Hard-Disk-Drive.

In einer anderen besonders bevorzugten Ausführungsform des erfindungsgemäßen Plattenspeichergeräts sind die Informationsträgerplatten starre oder flexible Speicherplatten, die in einer Wechselkassette angeordnet sind, welche den Betriebsraum erhöhter Reinheit bildet, wobei die Speicherplatten mit der Wechselkassette in das Gerät einführbar sind und nach dem Einführung mittels einer Einrichtung an der Plattenträgernabe befestigbar sind.

Erfindungsgemäß wird des weiteren auch ein Verfahren in Vorschlag gebracht, zur Herstellung eines Plattenspeichergeräts mit einem oder mehreren an einer rotierbaren Plattenträgernabe befestigten oder befestigbaren und mittels der Plattenträgernabe in einem Betriebsraum rotierbaren Informationsträgerplatten zur Speicherung von Daten und einem oder mehreren relativ zu Oberflächen der Informationsträgerplatten bewegbaren optischen oder magnetischen Schreib-/Leseköpfen zum Aufzeichnen und/oder Auslesen der Daten auf bzw. von den Oberflächen der Informationsträgerplatten, wobei die Plattenträgernabe und die Schreib-/Leseköpfe mit ihren Antriebseinheiten an einem einstückigen Gerätechassis gelagert werden und eine Geräteabdeckung vorgesehen wird, die an dem Gerätechassis befestigt wird und wobei die Lager- und Montageflächen für die Plattenträgernabe und für die Schreib-/Leseköpfe sowie für deren Antriebseinheiten an dem Gerätechassis in einer Aufspannung bearbeitet werden, wobei das Gerätechassis durch Stanzen und Umformen oder Prägen eines Blechteiles gebildet wird.

Weitere bevorzugte Ausführungsformen des erfindungsgemäßen Plattenspeichergerätes und vorteilhafte Ausführungsbeispiele des Verfahrens sind in den Unteransprüchen angegeben.

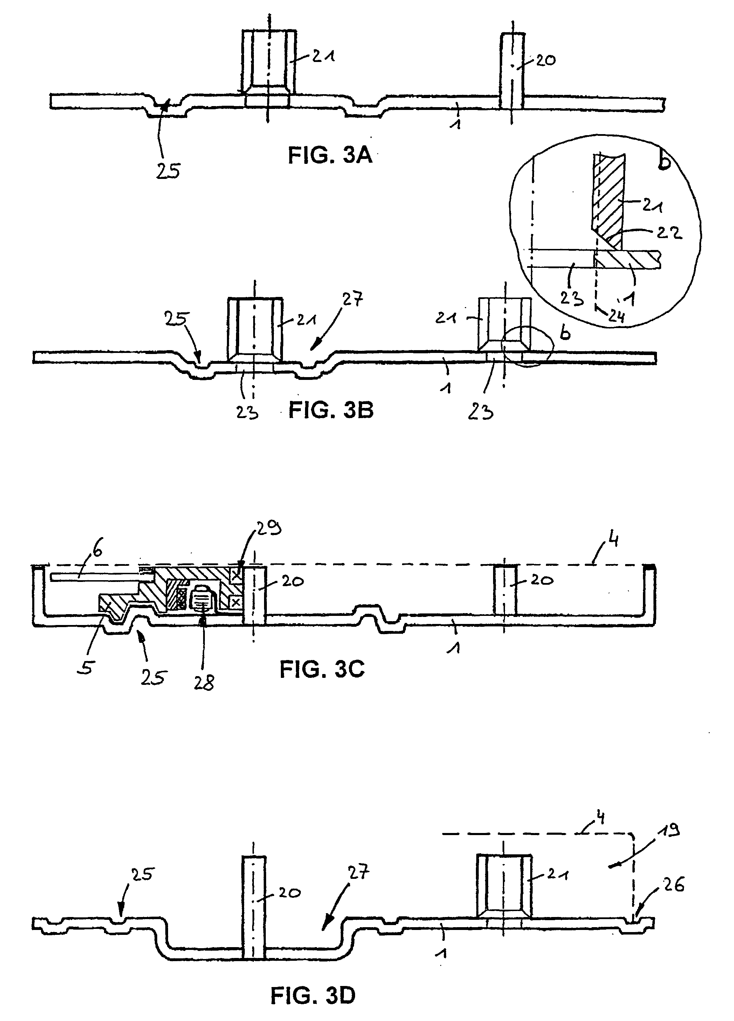

Im folgenden werden einige Ausführungsbeispiele des erfindungsgemäß bei einem Plattenspeichergerät verwendeten Gerätechassis aus einem Blech-Stanz-Umformteil anhand der Figuren 3A bis 3D erläutert, wobei die weiteren Funktionselemente nicht mehr beschrieben werden, da sie in an sich bekannter und beliebiger Weise wie beim Stand der Technik (beispielsweise wie in den Figuren 1 und 2 gezeigt und in diesem Zusammenhang erläutert) ausgebildet sein können.

Die Figuren 3A bis 3D zeigen jeweils ein als Gerätechassis dienendes Blechteil, in dem für die Aufnahme der Funktionseinheiten wie Speicherplatten und Schreib-/Leseköpfe sowie deren Antriebe und Lagerungen bzw. Nabe erforderliche Ausformungen bzw. Vertiefungen 27 und Randabschnitte zur Befestigung von anderen Gehäuseteilen durch Prägen bzw. Umformen ausgebildet sind.

Für die Lagerung erforderliche feststehende Achszapfen bzw. Lagerbolzen 20 oder rohrförmige Abschnitte bzw. Lagertragrohre 21 können entweder in durch Bohren oder Ausstanzen hergestellte Ausnehmungen des Blechteils 1 eingepreßt, eingeklebt oder durch Kondensatorimpulsschweißen festgeschweißt oder aber auf diesselbe Weise unmittelbar auf einer Fläche befestigt werden. Die Figuren 3A bis 3D zeigen unterschiedliche Kombinationen von Lagerzapfen 20 und Lagertragrohren 21 sowie unterschiedliche Varianten der Befestigung der Lagerzapfen an dem Blechteil.

Die als Lagertragrohre dienende Rohrabschnitte 21 weisen gemäß der Detaildarstellung b der Fig. 3B an der Stirnseite, mit der sie auf das als Gerätechassis dienende Blechteil 1 aufgesetzt sind, eine zum Außenumfang verlaufende bzw. sich verjüngende Phase oder Abschrägung 22 auf. Durch diese Abschrägung wird die Auflagefläche zwischen dem Rohrabschnitt und der Auflagefläche verkleinert. Dadurch wird eine genauer definierte Verschweißung und eine höhere Energiedichte an der Schweißstelle bei der Kondensatorimpulsverschweißung durch die kleinere Kontaktfläche sowie eine kleinere Erwärmungszone um die eigentliche Schweißstelle erreicht. Die Verschmelzung bzw. Verschweißung erfolgt an dem Bereich der Spitze der Abschrägung. Eine kleinere Auflagefläche führt auch dazu, daß ein Kontakt möglichst am gesamten Umfang gewährleistet ist. Außerdem ist durch die Abschrägung nach Außen gewährleistet, daß die Schweißzone nicht im Bereich des Enddurchmessers der Lagerbohrung liegt.

Die Rohrabschnitte sind jeweils konzentrisch zu einer Ausnehmung 23 in dem Blechteil angeordnet. Der Innendurchmesser der Rohrabschnitte 21 und der konzentrischen Ausnehmung 23 im Blechteil ist etwas kleiner als der für die Aufnahme der Welle oder Lagerung erforderliche Enddurchmesser 24. Bei der spanenden Endbearbeitung nach dem Verschweißen werden der Innendurchmesser des Rohrabschnittes zusammen mit dem Innendurchmesser der Ausnehmung bearbeitet, so daß eine möglichst hohe Genauigkeit erzielt wird. Der Materialabtrag an dem Rohrabschnitt und am Innenumfang der Ausnehmung soll zur Vermeidung von starken Erwärmungen und Spannungen möglichst klein gewählt sein.

Die Achszapfen bzw. rohrförmigen Abschnitte werden hinsichtlich ihrer Funktionsflächen in einer Aufspannung des Gerätechassis bearbeitet, um die erforderliche Genauigkeit zu erzielen. Dabei können die rohrförmigen Abschnitte entweder am Innenumfang berabeitet werden, wenn die Lagerung in den rohrförmigen Abschnitt eingesetzt werden soll, oder aber am Außenumfang, wenn die Lagerung außen montiert werden soll. Gleichzeitig können ggf. auch die oberen Stirnflächen der rohrförmigen Abschnitte und Achszapfen sowie Funktionsflächen und Montagebohrungen an der das Gerätechassis bildenden Grundplatte auf einfache Weise bearbeitet werden.

Die in den Fig. 3A bis 3D gezeigten sickenartigen Ausformungen 25, 26 dienen unter anderem der Erhöhung der Steifigkeit des Gerätechassis, wobei damit gezielt auch die Langzeitgenauigkeit des Gerätechassis erhöht werden kann, indem durch mechanische oder thermische Einflüße hervorgerufenen Spannungen abgebaut bzw. aufgenommen oder ausgeglichen werden können, ohne zu bleibenden Verformungen und damit Veränderungen der Lagebeziehung der Funktions- und Lagerflächen zu führen.
Sollten beispielsweise im Grundmaterial des Gerätechassis im Bereich der Lagertragflächen Walzfehler vorliegen, könnte sich das sehr nachteilig auf die Langzeitgenauigkeit bzw. Maßhaltigkeit des Gerätechasssis auswirken. Deshalb sollte insbesondere bei Stahl bereits vor der ersten Verformung ein Spannungsarmglühen erfolgen.
In der Fig. 3C beispielsweise weisen die sickenartigen Ausformungen 25 eine konzentrisch um die Lagerachse der Speicherplattennabe 5 umlaufende Ringnut und einen Höckerring auf, die im Zusammenwirken mit einem (schematisch dargestellten) entsprechend geformten Vorsprung der Plattenträgernabe 5 bzw. des Motors 28, der in die Ringnut eingreift, eine sogenannte Spaltdichtung bilden.
In dieser Figur ist auch die Anordnung des an sich bekannten Motors 28 innerhalb der Nabe und der Speicherplatten 6 an entsprechend ausgebildeten Aufnahmebereichen der Plattenträgernabe 5, die durch den Motor 28 antreibbar und mittels der Lagerung 29 an dem Lagerzapfen gelagert ist, schematisch dargestellt.

Die Sicken 26 am Außenumfang der Grundplatte in der Ausführung gemäß der Fig. 3D dienen beispielsweise der Befestigung der (nur schematisch und teilweise angedeuteten) wannen- oder schalenartige Geräteabdeckung 4, die in die umlaufende Sicke eingesetzt und in diesem Bereich mit der Grundplatte verschweißt, verschraubt oder verklebt bzw. versiegelt wird. Gegebenenfalls kann an dieser Verbindungsstelle eine zusätzliche Dichtung vorgesehen werden. Nach umlaufender Verbindung wird der Reinraum bzw. hochreine Betriebsraum 19 durch die Grundplatte bzw. das Gerätechassis 1 und die Geräteabdeckung 4 gebildet.

Bei der Ausführungsform der Fig. 3C ist das Blechteil wannenartig, beispilesweise durch Tiefziehen des Blechausgangsteils an den Umfangsflächen aufgebogen. Bei dieser Ausgestaltung kann die (ebenfalls nur schematisch und teilweise dargestellte) Geräteabdeckung 4 als ein relativ flacher Deckel ausgeführt sein.

Die Herstellung des Gerätechassis erfolgt ausgehend von dem Ausgangsmaterial durch die folgenden Schritte: Stanzen, ggf. thermische Vorbehandlung (Spannungsarmglühen), Prägen (Blechumformung), ggf. Temperaturbehandlung (je nach E-Modul und Zeit/Temperaturverhalten des Werkstoffes), Aufschweißen von Lagerbolzen und/oder Lagertragrohren, thermische Nachbehandlung (Tempern) und/oder Nachprägen, Feinendbearbeitung der Lager- und Bezugsflächen in möglichst einer Aufspannung.

Die Bearbeitung des Blechausgangsteils durch Stanzen ist bevorzugt. Alternativ dazu oder zur spanenden Vor- oder Endbearbeitung von Funktions- und Lagerflächen können aber auch andere Verfahren zur Anwendung gelangen, die geringe oder keine inneren Spannungen in den Bauteilen hervorrufen wie Abtragverfahren auf nicht-mechanischem Weg (chemisches Abtragen,Elektronen- oder Laserstrahlstrahlbearbeitung, Plasmastrahlbearbeitung, elektroerosives Abtragen usw.).

Der Zeitpunkt im Herstellungsablauf sowie die Parameter der jeweiligen thermischen Behandlungen richten sich nach dem Material und nach dem Grad der inneren Spannungen aufgrund von vorausgegangener Umformung und/oder Schweißbearbeitung. Deshalb wird die thermische Behandlung zum Abbau der inneren Spannungen wie bereits erläutert vor der ersten Prägung bzw. Umformung sowie vor, ggf. aber auch nach der Schweißbearbeitung, in jedem Fall aber vor der Endbearbeitung der Funktions- und Lagerflächen durchgeführt.

Als geeignetes Schweißverfahren bietet sich das Kondensatorimpulsschweißen an, da es nur sehr geringe thermische Einflüsse auf die Bereiche außerhalb der Schweißzone ausübt und daher die Gefahr bzw. das Ausmaß von Verformungen minimiert. Andere Schweiß- oder Fügeverfahren die diese Anforderungen erfüllen können aber auch verwendet werden. Insbesondere können auch Klebe- oder Lötverfahren zum Einsatz kommen.

Anstelle der thermischen Nachbehandlungen oder auch zusätzlich dazu können zum Abbau von Spannungen in den Bauteilen mechanische Verfahren wie das gezielte Bearbeiten bzw. Beaufschlagen von Oberflächen durch Hämmern oder künstliche Belastungen, beispielsweise durch Bearbeiten mit sogenannten Nagelbrettern eingesetzt werden.
Im Rahmen der Feinendbearbeitung der Lager- und Bezugsflächen können diese durch die an sich bekannten spannenden Verfahren wie Fräsen, Schleifen, Hohnen, Läppen usw. bearbeitet werden.

Das erfindungsgemäße Plattenspeichergerät wurde anhand eines Festplattenspeichergeräts bzw. HDD beschrieben, bei dem die Speicherplatten als starre magnetische Platten fest an der rotierbaren Nabe befestigt sind und ständig zusammen mit den magnetischen Schreib-/Leseköpfen in dem durch die miteinander dicht verbundenen Gerätechassis und Geräteabdeckung gebildeten Betriebsraum möglichst hoher Reinheit (Reinraum) angeordnet sind.
Alternativ kann das erfindungsgemäße Plattenspeichergerät und das Verfahren aber auch ein sogenanntes Wechsel-Speicherplattengerät, ein Floppy-Speichergerät, ein CD-ROM-Gerät oder ein DVD-Gerät betreffen, bei denen die Speicherplatten flexible oder starre magnetische oder optische Platten sind, die entweder in einer Wechselkassette angeordnet sind und mit dieser oder unmittelbar in das Gerät eingeführt werden und erst nach dem Einführen in das Gerät auf der rotierbaren Plattenträgernabe festgelegt oder mittels einer geeigneten Einrichtung (mechanische oder magnetische Klemmvorrichtung) auf der Plattenträgernabe festgeklemmt werden. Bei diesen Geräten ist die Reinheitsanforderung an den Betriebsraum, der beispielsweise durch die Wechselkassette gebildet wird, geringer als bei den Festspeicherplattengeräten.

## Patentansprüche

1. Plattenspeichergerät mit einem oder mehreren an einer rotierbaren Plattenträgernabe befestigten oder befestigbaren und mittels der Plattenträgernabe in einem Betriebsraum rotierbaren Informationsträgerplatten (6) zur Speicherung von Daten und einem oder mehreren relativ zu Oberflächen der Informationsträgerplatten (6) bewegbaren optischen oder magnetischen Schreib-/Leseköpfen (7) zum Aufzeichnen und/oder Auslesen der Daten auf bzw. von den Oberflächen der Informationsträgerplatten (6), wobei die Plattenträgernabe und die Schreib-/Leseköpfe (7) mit ihren Antriebseinheiten an einem einstückigen Gerätechassis (1) gelagert sind und eine Geräteabdeckung vorgesehen ist, die an dem Gerätechassis (1) befestigt ist und wobei die Lager- und Montageflächen für die Plattenträgernabe und für die Schreib-/Leseköpfe sowie für deren Antriebseinheiten an dem Gerätechassis (1) in einer Aufspannung bearbeitet sind,
**dadurch gekennzeichnet, daß** das Gerätechassis (1) durch ein mittels Stanzen und Umformen oder Prägen gefertigtes Blechteil gebildet ist.

2. Plattenspeichergerät gemäß Anspruch 1, **dadurch gekennzeichnet, daß** ein Rohrabschnitt bzw. Lagerzapfen zur Bildung eines Lagerabschnittes für die Lagerung der Plattenträgernabe und/oder ein Rohrabschnitt oder Achszapfen zur Lagerung der Schreib-/Leseköpfe an dem Gerätechassis angeschweißt sind.

3. Plattenspeichergerät gemäß Anspruch 2, **dadurch gekennzeichnet, daß** der Rohrabschnitt konzentrisch zu einem ausgestanzten Loch in dem Gerätechassis angeordnet ist, wobei der Innendurchmesser des Rohrabschnitts und der Innendurchmessers des Lochs geringfügig kleiner sind als der Enddurchmesser nach der Endbearbeitung und beide zusammen bearbeitet sind.

4. Plattenspeichergerät gemäß Anspruch 2 oder 3, **dadurch gekennzeichnet, daß** der Rohrabschnitt an der Stirnseite, mit der er auf das Gerätechassis aufgesetzt ist, zur Verkleinerung der Auflagefläche zum Außenumfang hin abgeschrägt ist.

5. Plattenspeichergerät gemäß Anspruch 2, 3 oder 4, **dadurch gekennzeichnet, daß** der Rohrabschnitt und ggf. der Lagerzapfen mittels Kondensatorimpulsschweißen oder Elektronenstrahlschweißen an dem Gerätechassis angeschweißt sind.

6. Plattenspeichergerät gemäß Anspruch 2, 3 oder 4, **dadurch gekennzeichnet, daß** der Rohrabschnitt und ggf. der Lagerzapfen einen Ansatz aufweist, der sich durch eine Ausnehmung in dem Gerätechassis hindurch erstreckt und mit diesem in an sich bekannter Weise vernietet ist.

7. Plattenspeichergerät gemäß einem der vorstehenden Ansprüche, **dadurch gekennzeichnet, daß** in dem Gerätechassis sickenartige Ausformungen zur Erhöhung der Steifigkeit des Gerätechassis und/oder zur Bildung einer Spaltdichtung mit der Antriebseinheit der Informationsträgerplatten, insbesondere der Plattenträgernabe ausgebildet sind.

8. Plattenspeichergerät gemäß Anspruch 7, **dadurch gekennzeichnet, daß** die sickenartigen Ausformungen (25,26) zur Bildung der Spaltdichtung eine zur Welle der Plattenträgernabe konzentrische umlaufende Ringnut und/oder einen konzentrischen umlaufenden Höckerring umfassen, der an Innen- und/oder Außenflächen mit der Bearbeitung der Lagerund Montageflächen in einer Aufspannung bearbeitet ist und zusammen mit der ebenfalls genau bearbeiteten Plattenträgernabe einen denkbar engsten Spalt bildet.

9. Plattenspeichergerät gemäß einem der vorstehenden Ansprüche, **dadurch gekennzeichnet, daß** das Gerätechassis aus einem Stahlblech oder aus einem Aluminiumblech geformt und der Rohrabschnitt und ggf. der Achszapfen aus einem damit verschweißbaren Material gefertigt sind.

10. Plattenspeichergerät gemäß einem der Ansprüche 1 bis 9, **dadurch gekennzeichnet, daß** die Informationsträgerplatten starre, an der Plattenträgernabe befestigte Speicherplatten sind und der Betriebsräum, in dem die Speicherplatten rotieren, ein Raum höchster Reinheit ist, der durch das Gerätechassis und die daran angebrachte Geräteabdeckung gebildet ist.

11. Plattenspeichergerät gemäß einem der Ansprüche 1 bis 9, **dadurch gekennzeichnet, daß** die Informationsträgerplatten starre oder flexible Speicherplatten sind, die in einer Wechselkassette angeordnet sind und diese den Betriebsraum erhöhter Reinheit bildet, wobei die Speicherplatten mit der Wechselkassette in das Gerät einführbar sind und nach dem Einführung mittels einer Einrichtung an der Plattenträgernabe befestigbar sind.

12. Verfahren zur Herstellung eines Plattenspeichergerätes mit einem oder mehreren an einer rotierbaren Plattenträgernabe befestigten oder befestigbaren und mittels der Plattenträgernabe in einem Betriebsraum rotierbaren Informationsträgerplatten (6) zur Speicherung von Daten und einem oder mehreren relativ zu Oberflächen der Informationsträgerplatten (6) bewegbaren optischen oder magnetischen Schreib-/Leseköpfen (7) zum Aufzeichnen und/oder Auslesen der Daten auf bzw. von den Oberflächen der Informationsträgerplatten, wobei die Plattenträgernabe und die Schreib-/Leseköpfe (7) mit ihren Antriebseinheiten an einem einstückigen Gerätechassis (7) gelagert werden und eine Geräteabdeckung vorgesehen wird, die an dem Gerätechassis (1) befestigt wird und wobei die Lager- und Montageflächen für die Plattenträgernabe und für die Schreib-/Leseköpfe (7) sowie ür deren Antriebseinheiten an dem Gerätechassis (1) in einer Aufspannung bearbeitet werden, **dadurch gekennzeichnet, daß** das Gerätechassis (1) durch Stanzen und Umformen oder Prägen eines Blechteiles gebildet wird.

13. Verfahren nach Anspruch 12, **dadurch gekennzeichnet, daß** das Gerätechassis vor der ersten Umformung und/oder nach dem Umformen je nach Materialzusammensetzung und Umformgrad einer Temperaturbehandlung zum Abbau von inneren Spannungen unterzogen wird.

14. Verfahren nach Anspruch 12 oder 13, **dadurch gekennzeichnet, daß** die Rohrabschnitte und/oder Achszapfen zur Bildung von Lagerabschnitten für die Plattenträgernabe und/oder für die Lagerung der Schreib-/Leseköpfe an dem Gerätechassis durch Kondensatorimpulsschweißen oder Elektronenstrahlschweßen angeschweißt oder angenietet werden.

15. Verfahren nach Anspruch 14, **dadurch gekennzeichnet, daß** das Gerätechassis vor und/oder nach dem Anschweißen oder Annieten des Rohrabschnittes und vor der Bearbeitung der Lager- und Montageflächen der Informationsträgerplattennabe und der Schreib-/Leseköpfe in einer Aufspannung einer Temperaturbehandlung zum Abbau von inneren Spannungen unterzogen wird.

16. Verfahren nach Anspruch 15, **dadurch gekennzeichnet, daß** das Gerätechassis vor und/oder nach dem Anschweißen oder Annieten des Rohrabschnittes und vor der Bearbeitung der Lager- und Montageflächen zusätzlich einer Nachumformung bzw. - Prägung unterzogen wird.

17. Verfahren nach einem der Ansprüche 12 bis 16, **dadurch gekennzeichnet, daß** das Gerätechassis aus einem Stahlblech oder aus einem Aluminiumblech geformt und der Rohrabschnitt aus einem damit verschweißbaren Material gefertigt ist.

## Claims

1. A disk storage device with one or several data carrier disks (6) fixed or fixable to a rotatable disk support hub as well as rotatable in an operation chamber by means of said disk support hub in order to record data, with one or several optic or magnetic write/read heads (7) movable relative to surfaces of the data carrier disks (6) so as to write and/or read data on the surfaces of the said data carrier disks (6); with said disk support hub and write/read heads (7) supported together with their drive units on a single-piece device chassis (1); with a device cover fixed to this device chassis (1); with bearing- and mounting surfaces for the said disk support hub and write/read heads together with their driving units machined on the said device chassis (1) in a single chucking step,
**characterized in that** the said device chassis (1) is made of a sheet metal by means of pressing and forming or stamping.

2. A disk storage device according to claim 1 **characterized in that** a tube portion or a bearing pin is welded on the device chassis so as to constitute a bearing portion for the disk support hub and/or a tube portion or a bearing pin for supporting the write/read heads is welded on the device chassis.

3. A disk storage device according to claim 2 **characterized in that** the said tube portion is located in the device chassis concentrically to a punched hole, whereby the inside diameter of both, the said tube portion and the said hole, are slightly smaller than their final diameters after final machining, whereby both are machined together.

4. A disk storage device according to claim 2 or 3 **characterized in that** the said tube portion attached with its front side to the device chassis is chamfered at this side toward the outside circumference so as to reduce the area of support.

5. A disk storage device according to claim 2, 3 or 4 **characterized in that** the tube portion and, if occasion arises, the bearing pin is welded on the device chassis by means of impulse capacitor resistance welding or electron beam welding.

6. A disk storage device according to claim 2, 3 or 4 **characterized in that** the tube portion and, if occasion arises, the bearing pin are equipped with a projection, which extends throughout an opening in the device chassis and which is riveted with the device chassis in a conventional manner.

7. A disk storage device according to one of the preceding claims **characterized in that** there are bead-like recesses provided in the device chassis so as to increase its stiffness and/or to provide a gap seal with respect to the drive unit of the data storage disks, especially of the disk support hub.

8. A disk storage device according to claim 7 **characterized in that** the said bead-like recesses (25,26) providing a gap seal include an annular groove and/or a hump ring, both concentric with the shaft of the disk support hub, whereby the latter is machined on inner- and/or outer faces in a single chucking step together with the bearing- and mounting surfaces and provides a tightest gap with the disk support hub, which is also machined to close tolerances.

9. A disk storage device according to one of the preceding claims **characterized in that** the device chassis is made by forming a sheet steel or a sheet aluminum and that the tube portion and, if occasion arises, the bearing pin is made of a material weldable to these materials.

10. A disk storage device according to one of the claims 1 to 9 **characterized in that** the data carrier disks are rigid storage disks fixed to the disk support hub and that the operation chamber, wherein the storage disks rotate, is a spotlessly clean room chamber which is established by the device chassis and the device cover fixed to it.

11. A disk storage device according to one of the claims 1 to 9 **characterized in that** the data carrier disks are rigid or flexible storage disks located in a removable cartridge, which establishes the operation chamber of increased cleanliness, whereby the storage disks together with the removable cartridge may be inserted into the device and then, after insertion, may be fixed to the disk support hub by means of a fixture.

12. A process for producing a disk drive device with one or several data carrier disks (6) fixed or fixable to a rotatable disk support hub as well as rotatable in an operation chamber by means of said disk support hub in order to record data and with one or several optic or magnetic write/read heads (7) movable relative to surfaces of the data carrier disks (6) so as to write and/or read data on/from the surfaces of the said data carrier disks, with said disk support hub and write/read heads (7) supported together with their drive units on a single-piece device chassis (1), with a device cover fixed to this device chassis (1); with bearing- and mounting surfaces for the said disk support hub and write/read heads (7) together with their driving units machined in a single chucking step on the said device chassis (1),
**characterized in that** the said device chassis (1) is made of a metal sheet by means of punching and reforming or stamping.

13. A process according to claim 12 **characterized in that** the device chassis is normalized before the first forming operation and/or after the forming operation, depending on the composition of the utilized materials and the degree of forming in order to relieve internal stresses.

14. A process according to claim 12 or 13 **characterized in that** the tube portions and/or shaft pins are riveted or welded on the device chassis by means of impulse capacitor resistance welding or electron beam welding so as to constitute bearing portions for bearing the disk support hub and/or the write/read heads.

15. A process according to claim 14 **characterized in that** the device chassis is normalized before and/or after the tube portion is welded or riveted on the chassis and before the bearing- and mounting surfaces of the data carrier support hub and the write/read heads are machined in a single chucking step so as to relieve internal stresses.

16. A process according to claim 15 **characterized in that** the device chassis is additionally reformed or restamped respectively after welding or riveting the tube portion on the device chassis and before machining the bearing- and mounting surfaces.

17. A process according to one of the claims 12 to 16 **characterized in that** the device chassis is made by forming a sheet steel or a sheet aluminum and that the tube portion is made of a material weldable to these materials.

## Revendications

1. Appareil à mémoire à disques avec un ou plusieurs disques de support de l'information (6) fixés ou pouvant être fixés sur un moyeu de support de disque rotatif, et pouvant tourner à l'aide du moyeu de support de disque dans un local d'exploitation, pour le stockage de données, et une ou plusieurs têtes de lecture/écriture (7) optiques ou magnétiques pouvant bouger relativement à la surface des disques de support de l'information (6) pour l'enregistrement et/ou l'extraction des données sur et/ou depuis les surfaces des disques de support de l'information, le moyeu de support de disque et les têtes de lecture/écriture (7) avec leurs unités d'entraînement étant disposés sur un châssis d'appareil (1) d'une seule pièce, et un couvercle d'appareil fixé sur le châssis (1) de l'appareil étant prévu, et les surfaces de dépôt et de montage pour le moyeu de support de disque et pour les têtes de lecture/écriture ainsi que pour les unités d'entraînement de celles-ci sur le châssis de l'appareil (1) étant usinées dans une fixation, **caractérisé en ce que** le châssis de l'appareil (1) est réalisé à l'aide d'une pièce en tôle façonnée par estampage et refaçonnage ou matriçage.

2. Appareil à mémoire à disques selon la revendication 1, **caractérisé en ce qu'**une section tubulaire et/ou un tourillon pour la formation d'une section de dépôt pour le dépôt du moyeu de support de disque, et/ou une section tubulaire ou un tourillon pour le dépôt des têtes de lecture/écriture, sont soudés sur le châssis de l'appareil (1).

3. Appareil à mémoire à disques selon la revendication 2, **caractérisé en ce que** la section tubulaire est disposée de manière concentrique à un trou découpé dans le châssis de l'appareil, le diamètre intérieur de la section tubulaire et le diamètre intérieur du trou sont légèrement inférieurs au diamètre final après la finition, et **en ce que** les deux sont usinés ensembles.

4. Appareil à mémoire à disques selon l'une quelconque des revendications 2 ou 3, **caractérisé en ce que** la section tubulaire est biseautée vers le pourtour extérieur sur le côté frontal avec lequel elle est posée sur le châssis de l'appareil, pour réduire la surface d'appui.

5. Appareil à mémoire à disques selon l'une quelconque des revendications 2, 3 ou 4, **caractérisé en ce que** la section tubulaire et le tourillon le cas échéant, sont soudés sur le châssis de l'appareil par un soudage à impulsions électrostatiques ou un soudage par faisceau d'électrons.

6. Appareil à mémoire à disques selon l'une quelconque des revendications 2, 3 ou 4, **caractérisé en ce que** la section tubulaire et le tourillon le cas échéant, présentent un appendice qui s'étend à travers un évidement dans le châssis de l'appareil, et est riveté à celui-ci de manière connue par ailleurs.

7. Appareil à mémoire à disques selon l'une quelconque des revendications précédentes, **caractérisé en ce que** des formes semblables à des moulures sont formées dans le châssis de l'appareil pour augmenter la rigidité du châssis de l'appareil et/ou pour former une étanchéité linéaire avec l'unité d'entraînement des disques de support de l'information, et en particulier le moyeu de support de disque.

8. Appareil à mémoire à disques selon la revendication 7, **caractérisé en ce que** les formes semblables à une moulure (25, 26) pour la formation de l'étanchéité linéaire entourent une gorge de retenue en révolution concentrique à l'axe du moyeu de support de disque et/ou un anneau à bosse en révolution concentrique, lequel est usiné dans une fixation sur les surfaces extérieures et/ou intérieures lors du finissage des surfaces de dépôt et de montage, et forme ensemble avec le moyeu de support de disque également façonné avec précision, une fente la plus étroite que l'on puisse imaginer.

9. Appareil à mémoire à disques selon l'une quelconque des revendications antérieures, **caractérisé en ce que** le châssis de l'appareil est formé à partir d'une tôle d'acier ou d'une tôle d'aluminium, et **en ce que** la section tubulaire et le tourillon le cas échéant, sont fabriqués en un matériau pouvant être soudé avec.

10. Appareil à mémoire à disques selon l'une quelconque des revendications 1 à 9, **caractérisé en ce que** les disques de support de l'information sont des disques de stockage rigides fixés sur le moyeu de support de disque, et **en ce que** le local d'exploitation, dans lequel les disques de stockage sont en rotation, est un local d'extrême propreté qui est formé par le châssis de l'appareil et le couvercle de l'appareil formé dessus.

11. Appareil à mémoire à disques selon l'une quelconque des revendications 1 à 9, **caractérisé en ce que** les disques de support de l'information sont des disques de stockage rigides ou souples disposés dans une cassette amovible, et **en ce que** celle-ci forme le local d'exploitation à propreté supérieure, moyennant quoi les disques de stockage peuvent être insérés dans l'appareil avec la cassette amovible, et peuvent être fixés au moyeu de support de disque après l'insertion à l'aide d'un dispositif.

12. Procédé pour la fabrication d'un appareil à mémoire à disques avec un ou plusieurs disques de support de l'information (6) fixés ou pouvant être fixés sur un moyeu de support de disque rotatif, et pouvant tourner à l'aide du moyeu de support de disque dans un local d'exploitation, pour le stockage de données, et une ou plusieurs têtes de lecture/écriture (7) optiques ou magnétiques pouvant bouger relativement à la surface des disques de support de l'information (6) pour l'enregistrement et/ou l'extraction des données sur et/ou depuis les surfaces des disques de support de l'information, le moyeu de support de disque et les têtes de lecture/écriture (7) avec leurs unités d'entraînement étant disposés sur un châssis d'appareil (1) d'une. seule pièce et un couvercle de l'appareil fixé sur le châssis de l'appareil (1) étant prévu, et les surfaces de dépôt et de montage pour le moyeu de support de disque et pour les têtes de lecture/écriture ainsi que pour les unités d'entraînement de celles-ci sur le châssis de l'appareil (1) étant usinées dans une fixation, **caractérisé en ce que** le châssis de l'appareil (1) est réalisé à l'aide d'une pièce en tôle façonnée par estampage et refaçonnage ou matriçage.

13. Procédé selon la revendication 12, **caractérisé en ce que** le châssis de l'appareil est soumis à un traitement thermique pour supprimer les tensions internes, avant le premier refaçonnage et/ou après le refaçonnage, en fonction de la composition du matériau et du degré de refaçonnage.

14. Procédé selon l'une quelconque des revendications 12 ou 13, **caractérisé en ce que** les sections tubulaires et/ou les tourillons sont soudés ou rivetés sur le châssis de l'appareil pour former des sections de dépôt pour le moyeu de support de disque et/ou pour le dépôt des têtes de lecture/écriture, par soudage à impulsions électrostatiques ou soudage par faisceau d'électrons.

15. Procédé selon la revendication 14, **caractérisé en ce que** le châssis de l'appareil est soumis, avant et/ou après le soudage ou le rivetage de la section tubulaire et avant l'usinage des surfaces de dépôt et de montage du moyeu du disque de support de l'information et des têtes de lecture/écriture, à un traitement thermique dans une fixation, pour la suppression de tensions internes.

16. Procédé selon la revendication 15, **caractérisé en ce que** le châssis de l'appareil est soumis additionnellement, avant et/ou après le soudage ou le rivetage de la section tubulaire et avant l'usinage des surfaces de dépôt et de montage, à un refaçonnage et/ou matriçage ultérieur.

17. Procédé selon l'une quelconque des revendications 12 à 16, **caractérisé en ce que** le châssis de l'appareil est formé à partir d'une tôle d'acier ou d'une tôle d'aluminium, et **en ce que** la section tubulaire est fabriquée en un matériau pouvant être soudé avec.
